# EUROPÄISCHE PATENTSCHRIFT

(11) **EP 0 701 342 B1**
(45) Veröffentlichungstag und Bekanntmachung des Hinweises auf die Patenterteilung: **16.05.2001**
(21) Anmeldenummer: 95202150.9
(22) Anmeldetag: 07.08.1995
(51) Int. Cl.: H04J 3/06, H04Q 11/04

(54) **Übertragungssystem zur Übertragung und zur Erkennung des Rahmenanfangs eines rahmensynchronisierten Signals**
Transmission system for transmitting and detecting the frame beginning of a frame synchronized signal
Système de transmission pour transmission et detection de début de la trame d'un signal synchronisé en trames

(30) Priorität: 20.08.1994 DE 4429595
(43) Veröffentlichungstag der Anmeldung: 13.03.1996
(73) Patentinhaber: LUCENT TECHNOLOGIES INC., Murray Hill, New Jersey 07974-0636 (US)
(72) Erfinder: Keller, Hans-Georg, Dipl.-Ing., c/o Philips, D-22335 Hamburg (DE); Hönig, Karl, Dipl.-Ing., c/o Philips, D-22335 Hamburg (DE)
(74) Vertreter: Blumbach, Kramer & Partner GbR

(56) Entgegenhaltungen:
- EP-A- 0 487 943
- DE-A- 3 833 184
- FR-A- 2 693 812
- US-A- 5 101 401

## Beschreibung

Die Erfindung bezieht sich auf ein Übertragungssystem zur Übertragung und zur Erkennung des Rahmenanfangs eines rahmensynchronisierten Signals.

Ein Verfahren bzw. eine Vorrichtung zu einer entsprechenden Ausrichtung von Dateneinheiten und Rahmen von seriellen Daten-Signalen ist in der Patent anmeldung FR 2 693 812 offenbart. Dabei werden serielle Daten in Einheiten von parallelen Eingabedaten entschachtelt und in einem Schieberegister mit einer Aufnahmekapazität von zwei Dateneinheiten gespeichert. Ein Synchronisationsmuster aus wenigstens zwei Einheiten mit einem ersten Wert, gefolgt von wenigstens zwei Einheiten mit einem zweiten Wert wird gesucht. Wenn eine Einheit der Daten gefunden wird, die den ersten Wert besitzen, werden im Schieberegister Ausrichtungs- bzw. Synchronisationsdaten zur Angabe ihrer Position erzeugt. Wird eine bestimmte Anzahl solcher Einheiten detektiert, werden deren Ausrichtungsdaten zum Herausziehen nachfolgender Einheiten aus derselben Position in dem Schieberegister benutzt. Ein Synchronisationsmuster wird als fortlaufende Folge ebenso ausgerichteter Einheiten und einer fortlaufenden Folge von Einheiten mit dem zweiten Wert erkannt. Das Synchronisationsmuster enthält dabei allerdings die Eingabedaten-Signale nicht.

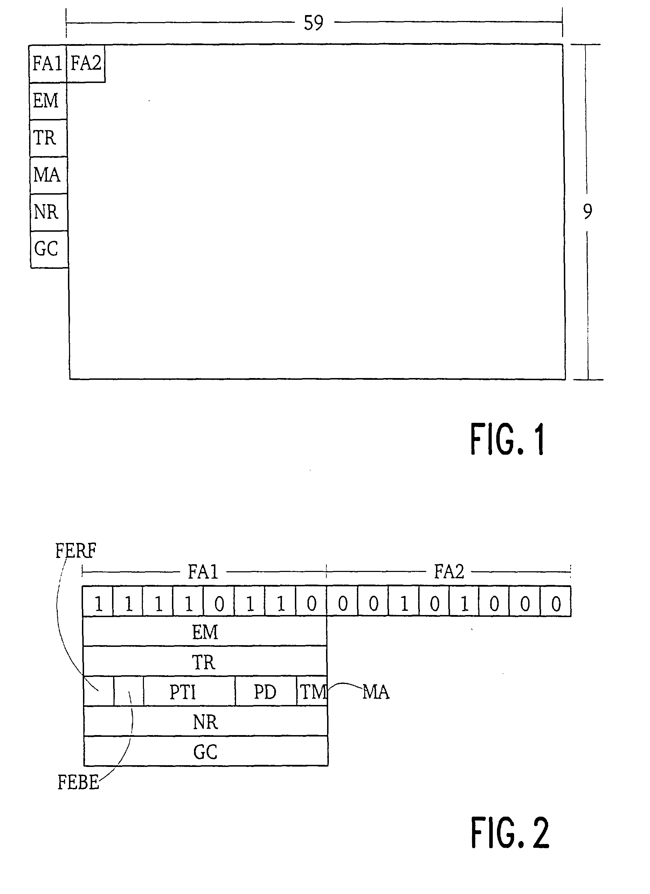

Desweiteren kann ein solches rahmensynchronisiertes Signal auch das 34368 Kbit/s-Signal der plesiochronen digitalen Hierachie (PDH) sein, welches verschiedene Daten transportieren kann. Der Rahmen dieses 34368 Kbit/s-Signals enthält insgesamt 537 Bytes und weist insgesamt 59 Spalten mit jeweils 9 Zeilen (oder Bytes) für Nutzdaten auf. Zusätzlich ist noch eine Spalte mit 6 Zeilen (oder Bytes) mit Steuerungsdaten enthalten. Die Struktur dieses Rahmens ist schematisch in der Fig. 1 dargestellt. Die ersten 6 Zeilen enthalten jeweils in der ersten Spalte Steuerdaten. Ferner sind noch in der ersten Zeile der zweiten Spalte Steuerdaten enthalten. In der Fig. 2 sind die Steuerdaten näher dargestellt. Die beiden Bytes FA1 und FA2 (Frame Alignment signal) in den ersten beiden Spalten der ersten Zeile dienen zur Erkennung des Rahmenanfangs und weisen die fest vorgegebene Bitfolge "1111011000101000" auf. Die Steuerdaten MA (Maintenance and Adaptation byte) in der ersten Spalte der vierten Zeile enthalten Informationen über die Art der zu transportierenden Nutzdaten. Diese Informationen geben das dritte bis fünfte Bit (als Payload Type Identifier {= PTI} bezeichnet) des Steuerfeldes MA an. Werden z.B. Zellen nach dem Asynchronen Transfermodus (ATM) transportiert enthält das PTI-Feld die Bitfolge "010". Weitere Informationen zur Rahmenstruktur können den ITU-T Recommendation G.832 entnommen werden.

Jede ATM-Zelle besteht aus einem Kopffeld mit einer Länge von 5 Bytes und einem Informationsfeld, in dem Nutzinformationen wie Fernsprech-, Bild-, Tonsignale usw. untergebracht sind, mit einer Länge von 48 Bytes. In einem Kopffeld sind Wegekennungen, Daten zur Fehlererkennung und Daten für Steuerinformationen vorhanden. In den Rahmen des 34368 Kbit/s-Signal der plesiochronen digitalen Hierachie werden genau 10 ATM-Zellen untergebracht. Die Bytes des Kopffeldes sind dabei unverschlüsselt und die Bytes des Informationsfeldes einer Zelle verschlüsselt in das 34368 Kbit/s-Signal eingefügt.

Durch Untersuchungen hat sich ergeben, daß bestimmte Bitfolgen des Kopffeldes von aufeinanderfolgenden Zellen die gleiche Struktur wie die Bitfolge für den Rahmenanfang des 34368 Kbit/s-Signal aufweisen können. Bei der Auswertung des 34368 Kbit/s-Signal könnte dann ein falscher Rahmenanfang ermittelt werden.

Aus der Patentschrift US-A-5 101 401 ist ein Übertragungssystem mit einer ersten und einer zweiten Synchronisationsworterfassungschaltung und einer Synchronisations bestimmungsschaltung bekannt geworden, von der im Oberbegrift des Patentanspruchs 1 ausgegangen wird.

Der Erfindung liegt daher die Aufgabe zugrunde, ein Übertragungssystem zu schaffen, welches eine sichere Erkennung des Rahmenanfangs des 34368 Kbit/s-Signal der plesiochronen digitalen Hierachie auch bei dem Transport von ATM-Zellen ermöglicht.

Die Aufgabe wird durch ein Übertragungssystem der eingangs genannten Art durch folgende Merkmale gelöst:
Das Übertragungssystem zur Übertragung und zur Erkennung des Rahmenanfangs eines rahmensynchronisierten Signals enthält eine erste Detektionsschaltung zur Setzung eines ersten Detektionssignals in einen ersten Zustand nach Detektion einer am Rahmenanfang des Signals auftretenden, ersten Bitfolge,
eine zweite Detektionsschaltung zur Setzung eines zweiten Detektionssignals in einen ersten Zustand nach Detektion einer an einer bestimmten Rahmenposition des Signals auftretenden, zweiten Bitfolge, wobei beide Detektionsschaltungen das rahmensynchronisierte Signal empfangen, und
eine Auswerteschaltung, die
   - einen Rahmenzähler enthält, der wenigstens während der Ermittlung des Rahmenanfangs zum Zurücksetzen auf einen Startwert nach Auftreten des ersten Zustands des ersten Detektionssignals vorgesehen ist, und
   - eine Kombinationsschaltung zur Bildung eines Rahmenzustandssignals enthält, das nur dann einen ersten Zustand aufweist, wenn der erste Zustand des ersten Detektionssignals während des Startwertes und der erste Zustand des zweiten Detektionssignals während eines bestimmten Rahmenwertes des Rahmenzählers auftritt.

Das erfindungsgemäße Übertragungssystem weist eine erste Detektionsschaltung auf, die den Rahmenanfang eines rahmensynchronisierten Signals ermittelt, und eine zweite Detektionsschaltung, die eine bestimmte Rahmenposition des rahmensynchronisierten Signals detektiert. Beispielsweise ermittelt die erste Detektionsschaltung bei Empfang von Daten des 34368 Kbit/s-Signals der plesiochronen digitalen Hierachie die Bitfolge der Bytes FA1 und FA2 und die zweite Detektionsschaltung die 3 Bits des PTI-Feldes. Ist der Rahmenanfang und die bestimmte Rahmenposition detektiert, wechseln ein erstes bzw. ein zweites Detektionssignal in einen ersten Zustand. Eine Auswerteschaltung stellt fest ob der Rahmenanfang des rahmensynchronisierten Signals gefunden worden ist. Hierzu enthält die Auswerteschaltung einen Rahmenzähler, der zur Zählung der Bitpositionen des rahmensynchronisierten Signals vorgesehen ist. Beispielsweise zählt der Rahmenzähler bei dem 34368 Kbit/s-Signal der plesiochronen digitalen Hierachie 4296 Takte, bevor er wieder bei dem Startwert (z.B. Null) beginnt. Der Rahmenzähler kann nur dann von dem im ersten Zustand befindlichen ersten Detektionssignal zurückgesetzt werden, wenn der Rahmenanfang noch nicht ermittelt worden ist. Ferner enthält die Auswerteschaltung eine Kombinationsschaltung, die ein Rahmenzustandssignal bildet. Das Rahmenzustandssignal ist in einem ersten Zustand, wenn die erste Detektionsschaltung den Rahmenanfang und die zweite Detektionsschaltung die bestimmte Rahmenposition detektiert haben. Der erste Zustand des Rahmenzustandssignals bedeutet, daß der Rahmenanfang gefunden worden ist.

Die falsche Erkennung des Rahmenanfangs ist durch die Detektion zweier Bitfolgen mit hoher Wahrscheinlichkeit ausgeschlossen. Praktische Untersuchungen mit dem 34368 Kbit/s-Signal der plesiochronen digitalen Hierachie haben auch eine sichere Erkennung des Rahmenanfangs nachgewiesen.

In einer Ausführungsform enthält die erste und zweite Detektionsschaltung jeweils ein Schieberegister zum Einschreiben der Bits des als serieller Datenstrom vorliegenden Signals und einen Vergleicher
- jeweils zum Vergleich der im Schieberegister zwischengespeicherten Bitfolge und der ersten bzw. zweiten Bitfolge,
- zur Setzung des ersten bzw. zweiten Detektionssignals in den ersten Zustand bei Übereinstimmung der im jeweiligen Schieberegister zwischengespeicherten und der ersten bzw. zweiten Bitfolge
- zur Setzung des ersten bzw. zweiten Detektionssignals in einen zweiten Zustand bei Nichtübereinstimmung der im jeweiligen Schieberegister zwischengespeicherten und der ersten bzw. zweiten Bitfolge.

Um die Wahrscheinlichkeit zu erhöhen, daß der korrekte Rahmenanfang gefunden worden ist, muß mehrmals (z.B. zweimal) hintereinander das Rahmenzustandssignal den ersten Zustand aufweisen. Auch wenn festgestellt werden soll, das der Rahmenanfang im Signal nicht mehr gefunden wird, muß das Rahmenzustandssignal mehrmals (z.B. fünfmal) hintereinander in einem zweiten Zustand sein. Hierdurch werden kurzzeitig auftretende Fehler ignoriert.

Die Auswerteschaltung enthält daher eine ein Folgezustandssignal erzeugende Zustandsschaltung, die zum Wechsel eines Folgezustandsignals aus einem zweiten in einen ersten Zustand vorgesehen ist, wenn das Rahmenzustandssignal mehrmals hintereinander den ersten Zustand aufweist, und zum Wechsel eines Folgezustandsignals aus dem ersten in den zweiten Zustand vorgesehen ist, wenn das Rahmenzustandssignal mehrmals hintereinander den zweiten Zustand aufweist. Der Rahmenzähler ist nach dem Wechsel des Folgezustandssignals in den zweiten Zustand zur Rücksetzung auf den Startwert bei Auftreten des ersten Zustands des ersten Detektionssignals vorgesehen. Wenn also das Folgezustandsignal anzeigt (erster Zustand), daß der Rahmenanfang mehrmals hintereinander gefunden worden ist, kann der Rahmenzähler nicht mehr durch das erste Detektionssignal zurückgesetzt werden.

Zur Bildung des Rahmenzustandssignals in der Kombinationsschaltung sind drei Kippglieder und ein UND-Gatter vorgesehen. Der Rahmenzähler ist nach Erreichen des Startwertes zur Ausgabe eines ersten Freigabeimpulses für ein erstes Kippglied zur Zwischenspeicherung des ersten Detektionssignals und nach Erreichen des bestimmten Rahmenwertes zur Ausgabe eines zweiten Freigabeimpulses für ein zweites Kippglied zur Zwischenspeicherung des zweiten Detektionssignals bestimmt. Die das Rahmenzustandssignal bildende Kombinationsschaltung enthält das UND-Gatter und ein drittes Kippglied. Das UND-Gatter ist mit dem jeweiligen Ausgang des ersten und zweiten Kippgliedes gekoppelt und das dritte Kippglied ist zur Zwischenspeicherung des Ausgangssignals des UND-Gatters vorgesehen.

Ein Ausführungsbeispiel der Erfindung wird nachstehend anhand der Zeichnungen erläutert. Es zeigen:
- Fig. 1: den Rahmen eines 34368 Kbit/s-Signal der plesiochronen digitalen Hierachie (PDH),
- Fig. 2: einen Ausschnitt des in Fig. 1 dargestellten Rahmens mit Steuerungsdaten,
- Fig. 3: ein Ausführungsbeispiel eines Teils eines Übertragungssystem mit einer Schaltungsanordnung zur Erkennung des Rahmenanfangs des rahmensynchronisierten 34368 Kbit/s-Signal der plesiochronen digitalen Hierachie und
- Fig. 4: ein Zustandsfolgediagramm zur Erläuterung einer in der Fig. 3 verwendeten Zustandsschaltung.

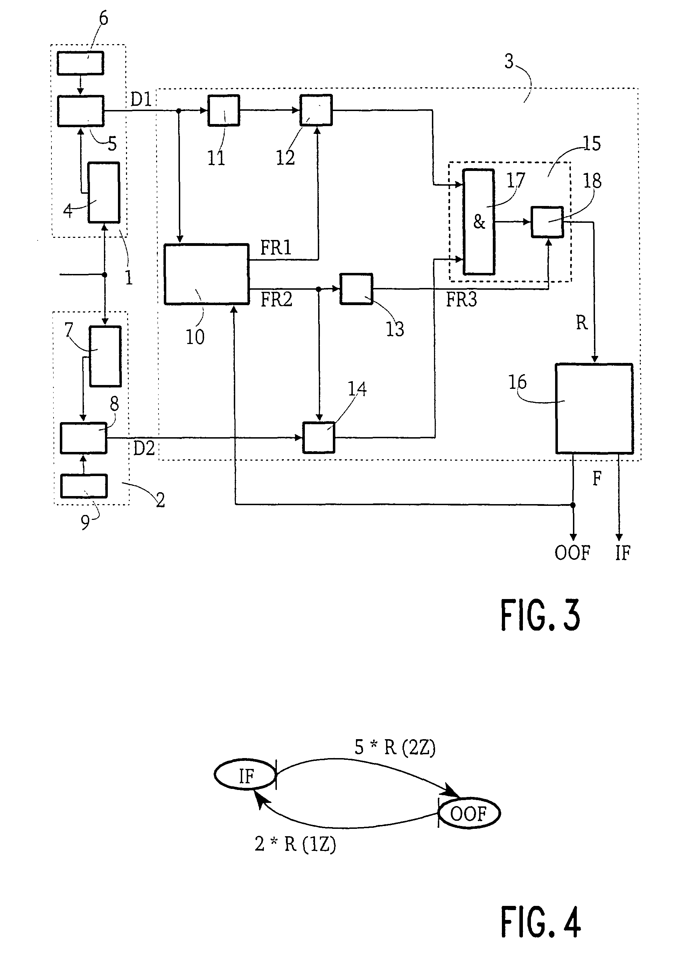

In der Fig. 3 ist eine Schaltungsanordnung zur Erkennung des Rahmenanfangs eines ATM-Zellen transportierenden 34368 Kbit/s-Signals der plesiochronen digitalen Hierachie (PDH) dargestellt, die Teil eines Übertragungssystems zur Übertragung dieses plesiochronen Signals ist. Um die ATM-Zellen aus dem plesiochronen Signal ausblenden zu können, muß zuvor der Rahmenanfang erkannt werden. Der Rahmen des 34368 Kbit/s-Signals ist in den Fig. 1 und 2 schematisch dargestellt, wie eingangs erläutert worden ist.

Die Schaltungsanordnung in der Fig. 3 enthält eine erste Detektionsschaltung 1, eine zweite Detektionsschaltung 2 und eine Auswerteschaltung 3. Den beiden Detektionsschaltungen 1 und 2 werden die seriellen Daten des plesiochronen Signals zugeführt. In der ersten Detektionsschaltung 1 werden die seriellen Daten des plesiochronen Signals in ein Schieberegister 4 eingeschrieben. Die Parallelausgänge des Schieberegisters 4 sind mit einem ersten Eingang eines Vergleichers 5 verbunden. Ein zweiter Eingang des Vergleichers 5 ist mit einem Register 6 gekoppelt, das dem Vergleicher 5 eine erste Bitfolge liefert. Die erste Bitfolge ("1111011000101000") weist eine Struktur auf, die den Steuerbits FA1 und FA2 des 34368 Kbit/s-Signals entsprechen. Der Vergleicher 5 liefert ein erstes Detektionssignal D1 an die Auswerteschaltung 3. Das erste Detektionssignal D1 ist in einem ersten Zustand, wenn der Vergleicher feststellt, daß seinen beiden Eingängen die gleichen Bitfolgen zugeführt werden. In den anderen Fällen, also bei Ungleichheit der beiden Bitfolgen, ist das erste Detektionssignal in einem zweiten Zustand.

Die zweite Detektionsschaltung 2 enthält ein zweites Schieberegister 7, einen zweiten Vergleicher 8 und ein zweites Register 9 und arbeitet auf dieselbe Weise wie die erste Detektionsschaltung 1. Der Vergleicher 8 liefert ein zweites Detektionssignal D2. In dem Register 9 ist eine zweite Bitfolge mit drei Bit abgespeichert, die der Struktur des PTI (payload type identifier)-Feldes ("010") für ATM-Zellen entsprechen. Sind in dem Schieberegister 7 und dem Register 9 die gleichen Bitfolgen abgespeichert, so nimmt das zweite Detektionssignal D2 einen ersten Zustand und in den anderen Fällen einen zweiten Zustand an.

Die Auswerteschaltung 3 enthält einen Rahmenzähler 10, vier Kippglieder 11 bis 14, eine Kombinationsschaltung 15 und eine Zustandsschaltung 16. Das erste Detektionssignal D1 wird dem Kippglied 11 und einem Rücksetzeingang des Rahmenzählers 10 zugeführt. Der Rahmenzähler 10 zählt zyklisch 4296 Takte, deren Anzahl der Anzahl der Bits eines Rahmens des plesiochronen Signals entspricht. Der Startwert des Rahmenzählers 10 ist der Wert Null. Bei diesem Wert gibt der Rahmenzähler 10 einen ersten Freigabeimpuls FR1 an ein weiteres Kippglied 12 (erstes Kippglied) ab. Mit dem Auftreten des Freigabeimpulses übernimmt das Kippglied 12 den Zustand des ersten Detektionssignals D1 aus dem Kippglied 11.

Der Rahmenzähler 10 erzeugt einen zweiten Freigabeimpuls FR2, wenn der Rahmenzähler 10 den Zählerstand 904 erreicht hat. Der Zählerstand 904 entspricht bezogen auf den Zählerstand Null am Rahmenanfang dem dritten Bit des PTI-Feldes. Mit dem Freigabeimpuls FR2 wird der Zustand des zweiten Detektionssignals D2 in das Kippglied 14 (zweites Kippglied) übernommen. Der Zustand des zweiten Freigabeimpulses FR2 wird noch in das Kippglied 13 eingeschrieben. Das Kippglied 13 speichert den Freigabeimplus und liefert diesen an die Kombinationsschaltung 15.

Die Kombinationsschaltung 15 enthält ein UND-Gatter 17 und ein weiteres Kippglied 18 (drittes Kippglied). Das UND-Gatter 17 verknüpft jeweils das Ausgangssignal des Kippgliedes 12 und das Ausgangssignal des Kippgliedes 14. Der Ausgangszustand des UND-Gatters 17 wird mit dem Auftreten des Freigabeimpulses FR3 von dem Kippglied 13 in das Kippglied 18 eingeschrieben. Das Kippglied 18 liefert ein Rahmenzustandssignal R, das einen zweiten Zustand annimmt, wenn die in den Kippgliedern 12 und 14 gespeicherten Zustände des ersten und zweiten Detektionssignals D1 und D2 jeweils den ersten Zustand aufweisen. In den anderen Fällen ist das Rahmenzustandssigal R in einem zweiten Zustand. Der erstes Zustand des Rahmenzustandssignals R gibt an, daß der Rahmenanfang in dem plesiochronen Signal gefunden worden ist.

Die das Rahmenzustandssignal R empfangende Zustandsschaltung 16 arbeitet nach dem in der Fig. 4 dargestellten Zustandsfolgediagramm. Die Zustandsschaltung 16 gibt ein Zwei-Bit-Folgezustandssignal F ab, dessen erstes Bit mit OOF (out of frame) und dessen zweites Bit mit IF (in frame) bezeichnet wird. Das Folgezustandssignal F ist in einem ersten Zustand wenn das erste Bit OOF logisch gleich "0" und das zweite Bit IF logisch gleich "1" ist. In einem zweiten Zustand befindet sich das Folgezustandsignal F, wenn das erste Bit OOF logisch gleich "1" und das zweite Bit IF logisch gleich "0" ist. In der Fig. 4 kann die Arbeitsweise der Zustandsschaltung 16 abgelesen werden. Wenn das Folgezustandssignal F in einem zweiten Zustand ist, wird dies im Zustandsfolgediagramm durch den Zustand OOF gekennzeichnet. Aus dem zweiten in den ersten Zustand (IF) kann das Folgezustandsignal F erst nach zweimaligem hintereinander auftretenden ersten Zustand des Rahmenzustandssignals R wechseln. Der erste Zustand des Rahmenzustandssignals R ist in der Fig. 4 mit R(1Z) bezeichnet. Umgekehrt kann das Folgezustandssignal F erst nach fünfmaligem hintereinander auftretenden zweiten Zustand des Rahmenzustandsignals R wechseln. Der zweite Zustand des Rahmenzustandssignals R ist in der Fig. 4 mit R(2Z) bezeichnet.

Wenn das Folgezustandssignal F im zweiten Zustand ist, ist der Rahmenzähler 10 nicht mit dem Rahmen des plesiochronen Signals synchronisiert. Mit dem Auftreten des ersten Zustandes des ersten Detektionssignals D1 wird der Rahmenzähler 10 dann auf den Startwert zurückgesetzt. Der Rahmenzähler 10 geht in einen Sperrmodus und kann erst wieder nach einem Zyklus (4296 Takte) zurückgesetzt werden. Falls nach einem Zyklus wieder der erste Zustand des ersten Detektionssignals D1 vorliegt, wird der nicht mehr im Sperrmodus befindliche Rahmenzähler 10 zurückgesetzt und für einen Zyklus gesperrt. Falls nach einem Zyklus der erste Zustand des ersten Detektionssignals D1 nicht vorliegt, zählt der Rahmenzähler weiter, wird nicht zurückgesetzt und wechselt auch nicht in den Sperrmodus. Durch ein erneutes Auftreten des ersten Zustandes des ersten Detektionssignals D1 wird der Rahmenzähler 10 während des Zyklus dann auf den Startwert zurückgesetzt. Die geschilderten Verläufe zur Synchronisation des Rahmenzählers können jedoch nur ablaufen, wenn das Folgezustandssignal im zweiten Zustand ist (erste Bit OOF logisch gleich "1"). Die Freigabe zur Synchronisation des Rahmenzählers wird also durch die Zuführung des ersten Bits OOF des Zustandsfolgesignals zum Rahmenzähler 10 ermöglicht. Falls das Folgezustandssignal F im ersten Zustand ist, kann der Rahmenzähler 10 nicht durch das erste Detektionssignal zurückgesetzt werden.

## Patentansprüche

1. Übertragungssystem zur Übertragung und zur Erkennung des Rahmenanfangs eines rahmensynchronisierten Signals
mit einer ersten Detektionsschaltung (1) zur Setzung eines ersten Detektionssignals (D1) in einen ersten Zustand nach Detektion einer am Rahmenanfang des Signals auftretenden, ersten Bitfolge,
mit einer zweiten Detektionsschaltung (2) zur Setzung eines zweiten Detektionssignals (D2) in einen ersten Zustand nach Detektion einer an einer bestimmten Rahmenposition des Signals auftretenden, zweiten Bitfolge,
wobei die erste und die zweite Detektionsschaltung das rahmensynchronisierte Signal empfangen, und
mit einer Auswerteschaltung (3),
dadurch gekennzeichnet, daß die Auswerteschaltung (3)
- einen Rahmenzähler (10) enthält, der wenigstens während der Ermittlung des Rahmenanfangs zum Zurücksetzen auf einen Startwert nach Auftreten des ersten Zustands des ersten Detektionssignals (D1) vorgesehen ist, und
- eine Kombinationsschaltung (15) zur Bildung eines Rahmenzustandssignals (R) enthält, das nur dann einen ersten Zustand aufweist, wenn der erste Zustand des ersten Detektionssignals (D1) während des Startwertes und der erste Zustand des zweiten Detektionssignals (D2) während eines bestimmten Rahmenwertes des Rahmenzählers (10) auftritt.

2. Übertragungssystem nach Anspruch 1,
dadurch gekennzeichnet,
daß die erste und zweite Detektionsschaltung (1, 2) jeweils ein Schieberegister (4, 7) zum Einschreiben der Bits des als serieller Datenstrom vorliegenden Signals und einen Vergleicher (5, 8)
- jeweils zum Vergleich der im Schieberegister (4, 7) zwischengespeicherten Bitfolge und der ersten bzw. zweiten Bitfolge,
- zur Setzung des ersten bzw. zweiten Detektionssignals (D1, D2) in den ersten Zustand bei Übereinstimmung der im jeweiligen Schieberegister (4, 7) zwischengespeicherten und der ersten bzw. zweiten Bitfolge
- zur Setzung des ersten bzw. zweiten Detektionssignals (D1, D2) in einen zweiten Zustand bei Nichtübereinstimmung der im jeweiligen Schieberegister (4, 7) zwischengespeicherten und der ersten bzw. zweiten Bitfolge enthält.

3. Übertragungssystem nach Anspruch 1 oder 2,
dadurch gekennzeichnet,
daß die Auswerteschaltung (3) eine ein Folgezustandssignal (F) erzeugende Zustandsschaltung (16) enthält, die zum Wechsel eines Folgezustandsignals (F) aus einem zweiten in einen ersten Zustand vorgesehen ist, wenn das Rahmenzustandssignal (R) mehrmals hintereinander den ersten Zustand aufweist, und zum Wechsel eines Folgezustandsignals (F) aus dem ersten in den zweiten Zustand vorgesehen ist, wenn das Rahmenzustandssignal (R) mehrmals hintereinander den zweiten Zustand aufweist, und
daß der Rahmenzähler (10) nach dem Wechsel des Folgezustandssignals (F) in den zweiten Zustand zur Rücksetzung auf den Startwert bei Auftreten des ersten Zustands des ersten Detektionssignals (D1) vorgesehen ist.

4. Übertragungssystem nach Anspruch 1, 2 oder 3,
dadurch gekennzeichnet,
daß der Rahmenzähler (10) nach Erreichen des Startwertes zur Ausgabe eines ersten Freigabeimpulses (FR1) für ein erstes Kippglied (12) zur Zwischenspeicherung des ersten Detektionssignals (D1) und nach Erreichen des bestimmten Rahmenwertes zur Ausgabe eines zweiten Freigabeimpulses (FR2) für ein zweites Kippglied (14) zur Zwischenspeicherung des zweiten Detektionssignals (D2) vorgesehen ist,
daß die das Rahmenzustandssignal (R) bildende Kombinationsschaltung (15) ein UND-Gatter (17) und ein drittes Kippglied (18) enthält und
daß das UND-Gatter (17) mit dem jeweiligen Ausgang des ersten und zweiten Kippgliedes (12, 14) gekoppelt ist und das dritte Kippglied (18) zur Zwischenspeicherung des Ausgangssignals des UND-Gatters (17) vorgesehen ist.

## Claims

1. A transmission system for transmitting and detecting the frame beginning of a frame-synchronised signal comprising a first detection circuit (1) for setting a first detection signal (Dl) into a first state after detection of a first bit sequence occurring at the frame beginning of the signal,
comprising a second detection circuit (2) for setting a second detection signal (D2) into a first state after detection of a second bit sequence occurring at a specific frame position of the signal,
the first and the second detection circuit receiving the frame-synchronised signal and
comprising an evaluation circuit (3),
characterised in that the evaluation circuit (3)
- contains a frame counter (10) which, at least during the detection of the frame beginning, is adapted to reset to a start value after the occurrence of the first state of the first detection signal (D1), and
- contains a combination circuit (15) for forming a frame state signal (R) which has a first state only if the first state of the first detection signal (Dl) occurs during the start value and the first state of the second detection signal (D2) occurs during a specific frame value of the frame counter (10).

2. A transmission system according to claim 1,
characterised in that
the first and second detection circuits (1, 2) each comprise a shift register (4, 7) for writing in the bits of the signal occurring in the form of a serial data stream, and a comparator (5, 8)
- each for comparing the bit sequence intermediately stored in the shift register (4, 7) and the first and second bit sequences,
- for setting the first and second detection signals (D1, D2) into the first state if the bit sequence intermediately stored in the respective shift register (4, 7) agrees with the first and second bit sequences,
- for setting the first and second detection signals (D1, D2) into a second state if the bit sequence intermediately stored in the respective shift register (4, 7) does not agree with the first and second bit sequences.

3. A transmission system according to claim 1 or 2,
characterised in that
the evaluation circuit (3) contains a state circuit (16) which generates a sequence state signal (F) and which is adapted to change a sequence state signal (F) from a second state into a first state if the frame state signal (R) comprises the first state in repeated succession, and to change a sequence state signal (F) from the first state to the second state if the frame state signal (R) comprises the second state in repeated succession, and in that the frame counter (10) after the change of the sequence state signal (F) into the second state is adapted to reset to the start value when the first state of the first detection signal (D1) occurs.

4. A transmission system according to claim 1, 2 or 3,
characterised in that
the frame counter (10), after reaching the start value, is adapted to output a first release pulse (FR1) for a first trigger (12) for the intermediate storage of the first detection signal (D1) and, after reaching the specific frame value, is adapted to output a second release pulse (FR2) for a second trigger (14) for the intermediate storage of the second detection signal (D2),
in that the combination circuit (15) forming the frame state signal (R) contains an AND gate (17) and a third trigger (18) and
in that the AND gate (17) is coupled to the respective output of the first and second triggers (12, 13) and the third trigger (18) is adapted to intermediate storage of the output signal of the AND gate (17).

## Revendications

1. Système de transmission destiné à la transmission et à la détection du début de trame d'un signal à synchronisation de trame,
avec un premier circuit de détection (1) pour mettre un premier signal de détection (D1) dans un premier état après la détection d'une première séquence de bits apparaissant au début de trame du signal,
avec un deuxième circuit de détection (2) pour mettre un deuxième signal de détection (D2) dans un premier état après la détection d'une deuxième séquence de bits apparaissant en une position de trame déterminée,
dans lequel les premiers et deuxième circuits de détection reçoivent le signal à synchronisation de trame, et
avec un circuit d'évaluation (3),
caractérisé en ce que le circuit d'évaluation (3)
- contient un compteur de trames (10) qui est prévu, au moins pendant la détermination du début de trame, pour être remis à une valeur initiale après l'apparition du premier état du premier signal de détection (D1), et
- contient un circuit combinatoire (15) qui est destiné à former un signal d'état de trame (R) qui ne présente un premier état que si le premier état du premier signal de détection (D1) apparaît pendant la valeur initiale et si le premier état du deuxième signal de détection (D2) apparaît pendant une valeur de trame déterminée du compteur de trames (10).

2. Système de transmission selon la revendication 1,
caractérisé en ce que le premier et le deuxième circuits de détection (1, 2) contiennent chacun un registre à décalage (4, 7) pour enregistrer les bits du signal présent sous forme de flux de données en série et un comparateur (5, 8)
- pour comparer chaque fois la séquence de bits mémorisée temporairement dans le registre à décalage (4, 7) à la première ou à la deuxième séquence de bits,
- pour mettre le premier ou le deuxième signal de détection (D1, D2) dans le premier état lors de la coïncidence de la séquence de bits mémorisée temporairement dans le registre à décalage respectif (4, 7) et de la première ou de la deuxième séquence de bits,
- pour mettre le premier ou le deuxième signal de détection (D1, D2) dans un deuxième état lors de la non-coïncidence de la séquence de bits mémorisée temporairement dans le registre à décalage respectif (4, 7) et de la première ou de la deuxième séquence de bits.

3. Système de transmission selon la revendication 1 ou 2,
caractérisé en ce
que le circuit d'évaluation (3) contient un circuit d'état (16) qui produit un signal d'état de séquence (F) et qui est prévu pour le passage d'un signal d'état de séquence (F) d'un deuxième à un premier état lorsque le signal d'état de trame (R) présente plusieurs fois successivement le premier état et pour le passage d'un signal d'état de séquence (F) du premier au deuxième état lorsque le signal d'état de trame (R) présente plusieurs fois successivement le deuxième état et
que le compteur de trames (10) est prévu, après le passage du signal d'état de séquence (F) dans le deuxième état, pour être remis à la valeur initiale lors de l'apparition du premier état du premier signal de détection (D1).

4. Système de transmission selon la revendication 1, 2 ou 3,
caractérisé en ce
que le compteur de trames (10) est prévu pour fournir, après que la valeur initiale a été atteinte, une première impulsion de validation (FR1) pour une première bascule (12) destinée à la mémorisation temporaire du premier signal de détection (D1) et pour fournir, après que la valeur de trame déterminée a été atteinte, une deuxième impulsion de validation (FR2) pour une deuxième bascule (14) destinée à la mémorisation temporaire du deuxième signal de détection (D2),
que le circuit combinatoire (15) formant le signal d'état de trame (R) contient une porte ET (17) et une troisième bascule (18) et
que la porte ET (17) est reliée respectivement à la sortie de la première bascule (12) et à la sortie de la deuxième bascule (12, 14) et la troisième bascule (18) est prévue pour la mémorisation temporaire du signal de sortie de la porte ET (17).
